# FASCICULE DE BREVET EUROPEEN

(11) **EP 2 077 932 B1**
(45) Date de publication et mention de la délivrance du brevet: **22.01.2014**
(21) Numéro de dépôt: 06830982.2
(22) Date de dépôt: 20.10.2006
(51) Int. Cl.: B26B 17/02, B23D 17/00, B23D 29/02, B23D 29/00, B23D 15/00, B23D 35/00, B23D 17/08, B23D 23/00, B23D 33/10

(54) **OUTIL DE COUPE POUR SECTIONNER DES ELEMENTS ALLONGES MASSIFS**
SCHNEIDWERKZEUG ZUM SEGMENTIEREN VON FESTEN LANGEN ELEMENTEN
CUTTING TOOL FOR SEGMENTING SOLID LONG ELEMENTS

(43) Date de publication de la demande: 15.07.2009
(73) Titulaire: Etablissements Pierre Grehal et Cie SA, 95350 Saint-Brice-Sous-Foret (FR)
(72) Inventeur: MARCON, Lionel, 95330 Domont (FR)
(74) Mandataire: Rataboul, Xavier
(86) Numéro de dépôt international: PCT/FR2006/002365
(87) Numéro de publication internationale: WO 2008/046973

(56) Documents cités:
- EP-A1- 1 459 825
- DE-A1- 19 515 955
- FR-A1- 2 588 205
- JP-A- 8 197 323
- US-A- 2 691 416
- US-A- 5 231 764
- 'Alfra Qualitätswerkzeuge und Maschinen', [en ligne] 31 Mars 2004, page 0A-50 Extrait de l'Internet: <URL:http://www.rittal.sk/PDF/ALFRA_Katalog .pdf> [extrait le 2011-06-16]

## Description

La présente invention concerne un outil de coupe pour sectionner des éléments allongés massifs ayant une forme ou un profil particulier tels que, par exemple, des tiges filetées ou des barres de seuil.

Pour la découpe d'éléments allongés massifs ayant une forme ou un profil particulier tels que, par exemple, des tiges filetées ou des barres de seuil, notamment pour couper de tels éléments à la bonne longueur, on utilise traditionnellement une scie, un disque ou un outil de coupe à effet de cisaillement. Cependant, quel que soit le type d'outil utilisé, la découpe déforme la forme bombée dans le cas d'une barre de seuil ou endommage le filetage dans le cas d'une barre filetée et nécessite donc de retravailler la forme ou le filetage à l'embout fraîchement découpé de l'élément allongé. Ceci est non seulement un travail délicat, lorsque la barre de seuil est réalisé en un matériau assez souple et mince ou avec un profil un peu complexe ou lorsque la barre filetée est pourvue d'un filetage assez fin, mais constitue surtout une perte de temps et ralentit l'installation ou le montage dans le cadre de laquelle ou duquel il faut découper ces éléments allongée massifs.

Un outil de coupe pour sectionner des tiges filetées est connu du document FR-A-2 588 205. Cet appareil comporte essentiellement un outil sur lequel est fixée une équerre, fixé par un boulon, comportant à sa partie supérieure l'empreinte filetée demi-cylindrique. Par rapport aux parties, s'articule une partie mobile munie, à sa partie inférieure, d'une autre empreinte filetée demi-cylindrique disposée dans le sens opposé à celle aménagé dans la partie fixe. La partie mobile est actionnée par un levier multiplicateur d'efforts. Les empreintes filetées viennent en appui contre la tige filetée au moment de la coupe afin de conserver l'intégrité du filet de la tige filetée.

Le but de l'invention est de proposer un moyen permettant de découper des éléments allongés massifs de manière à ne pas avoir besoin de les retravailler.

Le but de l'invention est atteint avec un outil de coupe selon la revendication 1.

Selon l'invention, la lame et le support sont pourvus chacun d'une matrice conformée pour recevoir un élément allongé massif au cours de la découpe, chacune des deux matrices ayant un tranchant de forme et dimensions complémentaires à la forme et aux dimensions de l'élément allongé massif à sectionner, forme et dimensions prises aux abords du plan de cisaillement.

L'outil de coupe selon l'invention est donc un outil à effet de cisaillement suivant un plan de cisaillement traversant un axe longitudinal de élément allongé, le cisaillement étant effectué entre une lame fixe montée sur le support, et une lame mobile montée pivotant sur le support. Aussi bien la lame fixe que la lame mobile sont pourvues chacune d'une matrice conformée pour recevoir un élément allongé massif, qui est à découper, avec un contact de forme entre chacune des matrices et une partie correspondante de l'élément allongé massif. A cet effet, chacune des deux matrices présente un tranchant essentiellement plat comportant une partie où la forme du tranchant est adaptée à celle de l'élément allongé à découper. Lorsque l'outil est conformé, par exemple, pour découper des tiges filetées, le tranchant comprend une partie où sont pratiqués un ou plusieurs évidements demi-cylindriques dont les formes et dimensions sont complémentaires à celles d'un ou de plusieurs filetages différents de tiges à sectionner. Et, pour citer un autre exemple, lorsque l'outil est conformé pour découper des barres de seuil, le tranchant comporte une partie où il suit la forme concave ou convexe du profil de la barre de seuil.

Il convient de préciser ici que, dans le contexte de la présente invention, le terme « plat » caractérise un tranchant ayant une certaine largeur, par opposition à un tranchant n'ayant qu'un filet tel la lame d'un couteau. De plus, dans le cadre de la présente invention, le tranchant s'étend perpendiculairement par rapport au plan de cisaillement de l'outil. En d'autres termes, le fait que les tranchants des deux matrices de l'outil de l'invention ne s'étendent pas, là où la découpe se fait, suivant des plans, mais suivant des surfaces complémentaires aux formes des éléments allongés à découper, ne nuit pas à l'appellation « plat » des tranchants.

Ainsi, dans le cas d'un outil pour découper des tiges filetées, chacune des deux matrices est pourvue d'un ou de plusieurs évidements demi-cylindriques dont la paroi présente un taraudage avec la forme et les dimensions complémentaires au filetage d'une tige filetée à sectionner. Lorsque l'outil est conçu pour couper des tiges filetées de grand diamètre, chacune des matrices est avantageusement pourvue d'un seul évidement demi-cylindrique et lorsque l'outil est conçu pour couper des tiges filetées de petit diamètre, chacune des matrices est pourvue de trois, voire même quatre évidements demi-cylindriques, un pour chaque diamètre de filetage.

L'outil de coupe de l'invention est pourvu avantageusement, mais nullement nécessairement, de matrices amovibles et interchangeables. L'utilisation de matrices amovibles donne à l'outil de coupe une application plus large en ce qui concerne les types d'éléments allongés massifs pouvant être découpés avec l'outil de l'invention. En outre, l'utilisation de matrices amovibles permet d'utiliser l'outil pour une plus grande gamme de dimensions des éléments allongés à découper que si les matrices étaient réalisées en une seule pièce avec le support et la lame et que l'outil ne serait donc utilisable que pour un, deux ou trois types de filetage définitivement déterminés. Par ailleurs, l'utilisation de matrices amovibles contribue à une durée d'utilisation plus longue de l'outil du fait de pouvoir remplacer facilement des matrices usées.

En effet, comme des essais l'ont montré, l'outil de coupe de l'invention réussit de couper les tiges filetées même lorsque les matrices, et plus précisément lorsque les tranchants des matrices, ne sont plus à 100% en bon état. Cependant, pour obtenir le résultat escompté et la qualité de coupe pour laquelle l'outil de l'invention a été développé, il faut que les tranchants aient des bords nets.

L'avantage de l'outil de coupe de l'invention par rapport à des outils à cisaillement antérieurs et même par rapport à des outils de coupe par disque ou par scie est obtenue par le fait que la tige filetée est saisie par les deux matrices par liaison de forme et non pas par appui sur deux tranchants plats ni par action tangentielle d'un outil tranchant à disque.

Au contraire, l'outil de l'invention saisit les deux moitiés opposées de la tige à découper exactement de part et d'autre du plan de cisaillement et maintient ainsi le matériau des deux côtés du plan de cisaillement dans sa forme d'origine.

L'outil de l'invention présente par ailleurs, selon différents modes et variantes de réalisation possibles, l'une au moins des caractéristiques ci-après, considérées isolément ou selon toute combinaison techniquement possible :
la lame et le support sont pourvus chacun d'une matrice conformée pour recevoir une tige filetée au cours de la découpe, chacune des deux matrices ayant un tranchant pourvu d'au moins un évidement demi-cylindrique de forme et dimensions complémentaires au filetage de la tige filetée à sectionner ;
la lame et le support sont pourvus chacun d'une matrice à trois évidements demi-cylindriques de formes et dimensions complémentaires à celles de trois filetages différents de tiges filetées à sectionner ;
la lame et le support sont pourvus chacun d'une matrice pourvu d'un tranchant plat courbé, respectivement concave ou convexe, adapté à la section transversale d'un élément allongé massif tel une barre de seuil à sectionner ;
le bras est pourvu d'une poignée ;
l'outil comprend une règle mobile en T montée transversalement, et de manière réglable, par rapport au socle et constituant un appui pour la tige filetée à sectionner ;
la règle est graduée ;
le socle est prolongé dans le plan de la coupe par un pied assurant la stabilité de l'outil dans le plan de la coupe et dans un sens transversal à celui-ci.

D'autres caractéristiques et avantages de la présente invention ressortiront de la description ci-après d'un mode de réalisation de l'outil de coupe de l'invention. La description est faite en référence aux dessins annexés dans lesquels :
- la figure 1 représente, en perspective, un outil de coupe utile à la compréhension de l'invention,
- la figure 2 représente, en tant que détail de la figure 1, une partie de la lame et du support de l'outil de la figure 1,
- la figure 3 représente la lame et des matrices de l'outil de la figure 1 en détail,
- la figure 4 représente la disposition d'une règle
- la figure 5 représente une variante de réalisation de l'outil de la figure 1,
- la figure 6 représente, en perspective, un outil de coupe selon un mode de réalisation de l'invention, vue de l'un des deux côtés de l'outil et
- la figure 7 représente l'outil de la figure 6 vu de l'autre de ses deux côtés.

L'outil de coupe est décrit ci-après à l'aide d'un mode de réalisation de l'invention et un outil de coupe utile à la comprehension de l'invention, la différence entre les deux résidant dans la conception du mécanisme de pivotement de la lame, et deux variantes de réalisation ayant trait au type d'élément allongé massif à découper, à savoir une tige filetée et une barre de seuil.

Il va sans dire que ces exemples de réalisation ont été choisis arbitrairement et qu'ils n'ont aucun caractère limitatif pour l'invention.

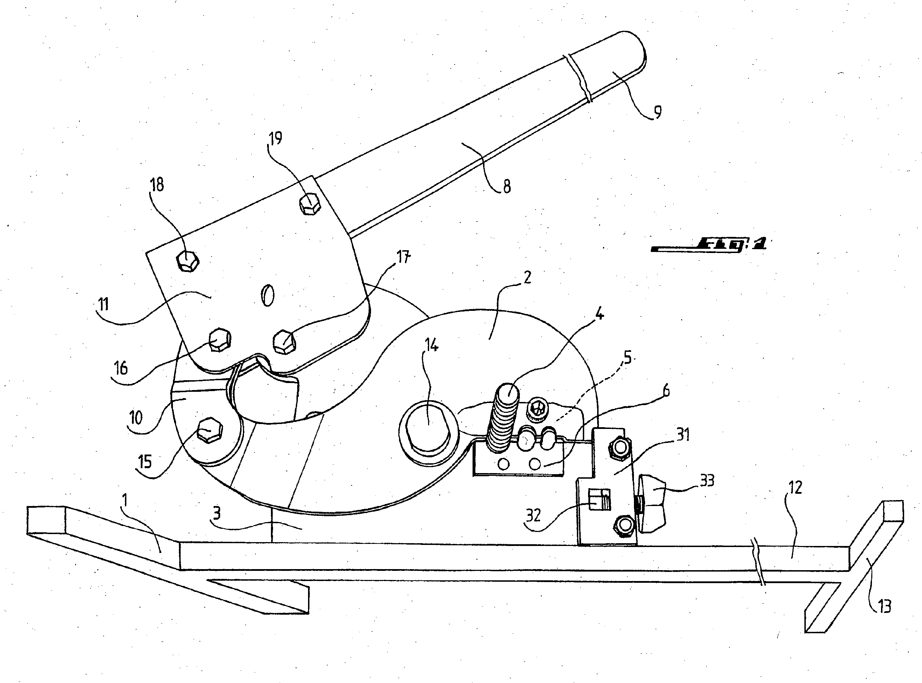

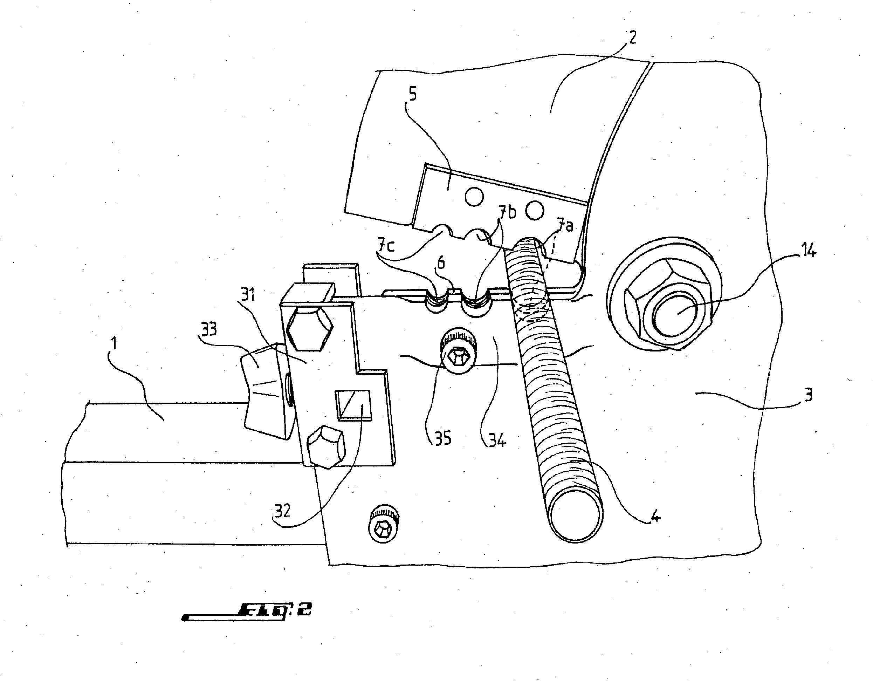

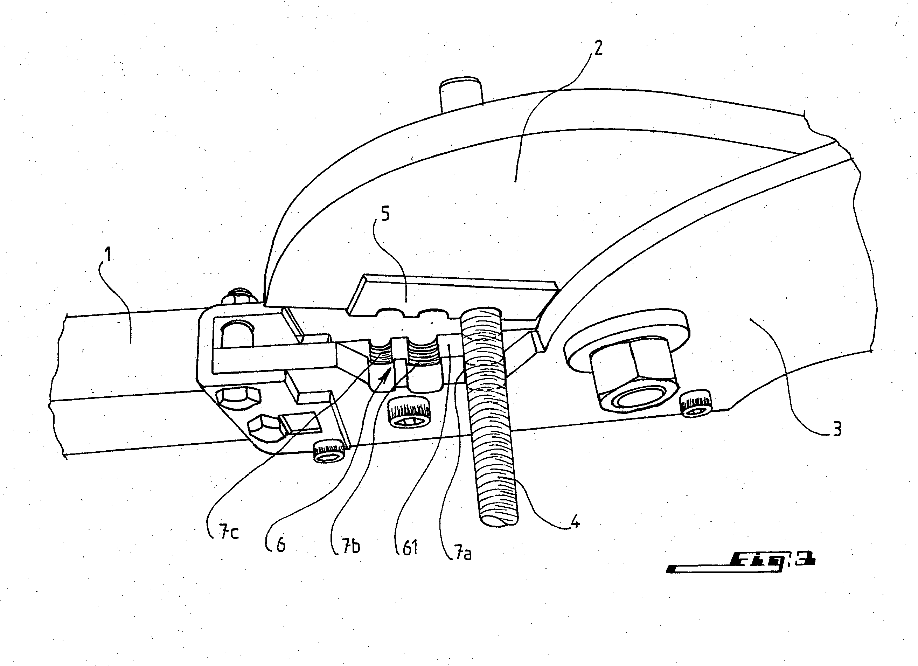

Comme la figure 1 le montre, un outil de coupe non selon l'invention pour sectionner des tiges filetées comprend un socle 1 et une lame 2 montée mobile sur un support 3 attaché au socle 1. Cette disposition permet de déplacer la lame 2 entre une position ouverte pour recevoir, entre la lame 2 et le support 3, une tige filetée 4 qui doit être sectionnée, et une position fermée à la fin d'une découpe. La lame 2 et le support 3 sont pourvus chacun d'une matrice référencée respectivement 5 et 6, ces matrices étant conformées pour recevoir ensemble et maintenir fermement pendant la découpe, une tige pourvue d'un filetage prédéterminé auquel les matrices sont adaptées. A cet effet, chacune des deux matrices comporte un tranchant plat pourvu d'un ou de plusieurs évidements demi-cylindriques 7 dont la forme et les dimensions sont complémentaires au filetage de la tige filetée 4 à sectionner. Les figures 2 et 3 représentent le tranchant plat 61 de la matrice 6.

Comme représenté dans les dessins, l'outil de coupe comporte avantageusement des matrices 5, 6 amovibles dont chacune est pourvue de trois évidements demi-cylindriques 7a, 7b, 7c ayant des parois taraudées et notamment des dimensions correspondant à celles de trois filetages différents. Les matrices 5, 6 sont montées de manière amovible respectivement sur la lame 2 et sur le support 3, afin de pouvoir les remplacer facilement en cas d'usure ou pour pouvoir couper d'autres calibres de filetage à l'aide d'autres matrices.

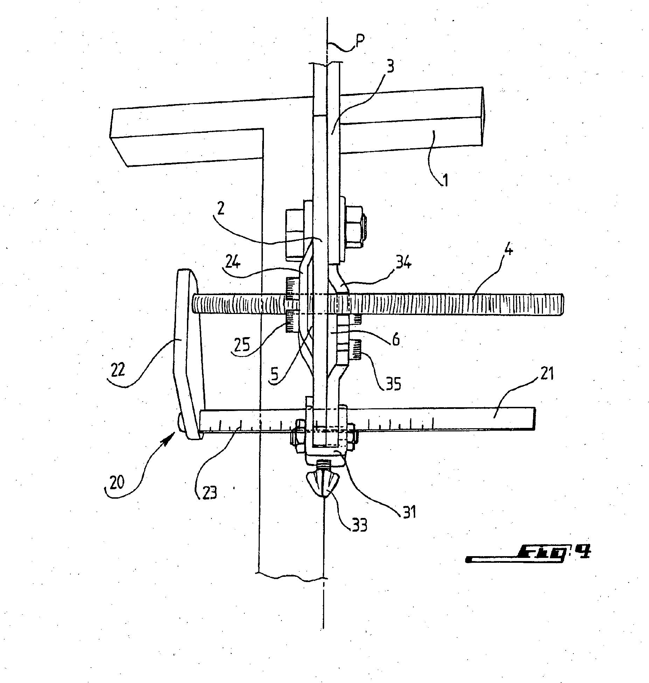

Comme on peut l'entrevoir sur les figures 2 et 3 et comme il est plus clairement visible sur la figure 4, la lame 2 comporte, à l'endroit de montage de la matrice 5, une partie 24 déviée par rapport au plan de la lame afin de laisser la place, dans ledit plan de la lame 2, à la matrice 5. De manière analogue, le support 3 comporte une partie 34 déviée par rapport au plan du support 3, afin de laisser la place, dans ledit plan du support 3, à la matrice 6. Les matrices 5, 6 sont fixées sur les parties déviées 24, 34 par des vis 25, 35. Grâce à cette disposition de l'invention, le cisaillement de la tige filetée est effectué par les matrices 5, 6 et les parties déviées 24, 34 contribuent au maintien de la tige par une surface d'appui plus large que par les seules matrices.

Dans l'exemple de réalisation représenté dans les dessins, chacune des deux matrices 5, 6 comporte trois évidements 7a, 7b, 7c pour sectionner des tiges filetées 4 à diamètre décroissant de l'évidement 7a vers l'évidement 7c, c'est-à-dire avec un diamètre décroissant au fur et à mesure que la distance de l'évidement, considéré par rapport à un axe de pivotement 14 de la lame 2, augmente.

Comme la figure 1 le montre par ailleurs, la lame 2 est reliée à un bras 8 formant levier, par un mécanisme à genouillère 10, 11 et le bras 8 est pourvu d'une poignée 9.

Afin de donner à l'outil de coupe une meilleure stabilité, le socle 1 est prolongé dans le plan de la coupe par un pied 12 comportant une partie transversale 13.

Enfin, comme représenté dans les dessins, l'outil de coupe comprend avantageusement, mais pas nécessairement, une règle mobile 20 en T, montée transversalement et de manière réglable par rapport au support 3. La règle mobile 20 constitue un appui pour la tige filetée 4 à sectionner et, lorsqu'elle est pourvue d'une graduation 23, facilite la coupe de la tige filetée à la bonne longueur.

Comme déjà indiqué plus haut, la lame 2 est reliée au bras 8 par un mécanisme à genouillère. Cette conception réunit deux fonctions, à savoir une multiplication des efforts de la personne manipulant l'outil de coupe et une disposition des différents éléments de manière à obtenir un outil compact.

Selon la conception choisie, la lame 2 comporte une partie avant sur laquelle est montée, de manière échangeable, la matrice 5, et une partie arrière portant un premier axe d'articulation 15. Sur cet axe 15 est fixé, de manière pivotante, un élément plat courbé 10 ayant la fonction d'une bielle dont l'extrémité opposée à l'axe 15 porte un deuxième axe d'articulation 16 par lequel l'élément 10 est relié pivotant à un élément 11 solidaire du bras 8. Moyennant l'élément 11, le bras 8 est monté pivotant, à l'aide d'un troisième axe d'articulation 17, sur le support 3. L'élément de fixation 11, sur lequel le bras 8 est fixé moyennant des boulons 18, 19, est formé de manière que le bras 8 est déporté par rapport au troisième axe d'articulation 17.

Grâce à cette disposition de l'invention, les efforts d'une personne utilisant l'outil de coupe de l'invention sont transmis sur les matrices 5, 6 de la manière suivante : le bras 8 et la partie de l'élément de liaison 11 située entre le deuxième axe d'articulation 16 et le troisième axe d'articulation 17 forment une première paire de leviers avec un coefficient de multiplication d'effort assez important selon le rapport de longueurs entre les deux leviers. L'effort présent au deuxième axe d'articulation 16 est transmis par l'élément de liaison 10, comme par une bielle, au premier axe d'articulation 15 de la lame 2. Sur la lame 2, une seconde paire de leviers est formée, à savoir un levier formé par la partie de lame située entre l'évidement 7 dans lequel s'engage une tige filetée à sectionner et l'axe de pivotement 14 de la lame 2 et un autre levier est délimité entre l'axe de pivotement 14 et le premier axe d'articulation 15. En raison de la plus grande longueur de levier entre les deux axes 14, 15 par rapport au levier entre l'évidement 7 et l'axe 14, un effet multiplicateur de force est obtenu. Il est intéressant à noter qu'il y a en fait autant de paires de leviers sur la lame 2 qu'il y a d'évidements dans la matrice 5. En effet, la partie de la lame 5 entre l'évidement et l'axe de pivotement 14 constitue un levier dont la longueur dépend de la distance entre l'évidement considéré et l'axe de pivotement 14. Lorsqu'il y a, comme représenté dans les dessins, trois évidements 7a, 7b, 7c, il y a trois longueurs de levier différentes. Chacun de ces trois leviers forme avec la partie de la lame située entre l'axe de pivotement 14 et l'axe d'articulation 15 une paire de leviers individuels avec des rapports de multiplication à chaque fois différents.

Aussi, il est nécessaire de disposer l'évidement avec un plus grand diamètre le plus proche de l'axe de pivotement 14 pour obtenir le plus grand rapport de multiplication entre ce levier et le levier formé entre les axes 14 et 15. Le coefficient de multiplication de la suite de paires de leviers intervenant entre la personne manipulant l'outil de coupe et la matrice 5 exerçant un effort de cisaillement sur une tige filetée à sectionner correspond donc approximativement au produit de multiplication des deux coefficients de multiplication de chacune des deux paires de leviers décrits ci avant.

Comme déjà indiqué plus haut, l'outil de coupe de l'invention peut être équipé avantageusement, mais non nécessairement, d'une règle 20 en forme d'un T. La règle 20 est montée coulissante dans une bride 31 solidaire du support 3. La bride 31 comporte des ouvertures 32 destinées à recevoir de manière coulissante un corps tigiforme 21 de la règle 20. La tige 21, et de manière analogue les ouvertures 32, peuvent avoir toute forme et section utile, notamment une section carrée comme représentée sur les dessins ou une section circulaire. Une des deux extrémités opposées de la tige 21 est pourvue d'une plaque 22 formant une butée réglable pour le positionnement d'une tige filetée 4 à couper. La plaque 22 peut avoir différentes formes, notamment une forme approximativement triangulaire, pour tenir compte de la différence de niveau de montage par rapport à la tige 4 à sectionner et pour donner la possibilité de positionner la plaque 22 d'un côté ou de l'autre de la lame 2.

Pour simplifier la découpe de la tige filetée à la bonne longueur, la règle 20 peut être pourvue d'une graduation 23. Lorsque la règle est positionnée à la bonne longueur de coupe, elle est arrêtée dans cette position moyennant une vis d'arrêt 33 avantageusement pourvue d'une poignée pour pouvoir la serrer et desserrer sans outil.

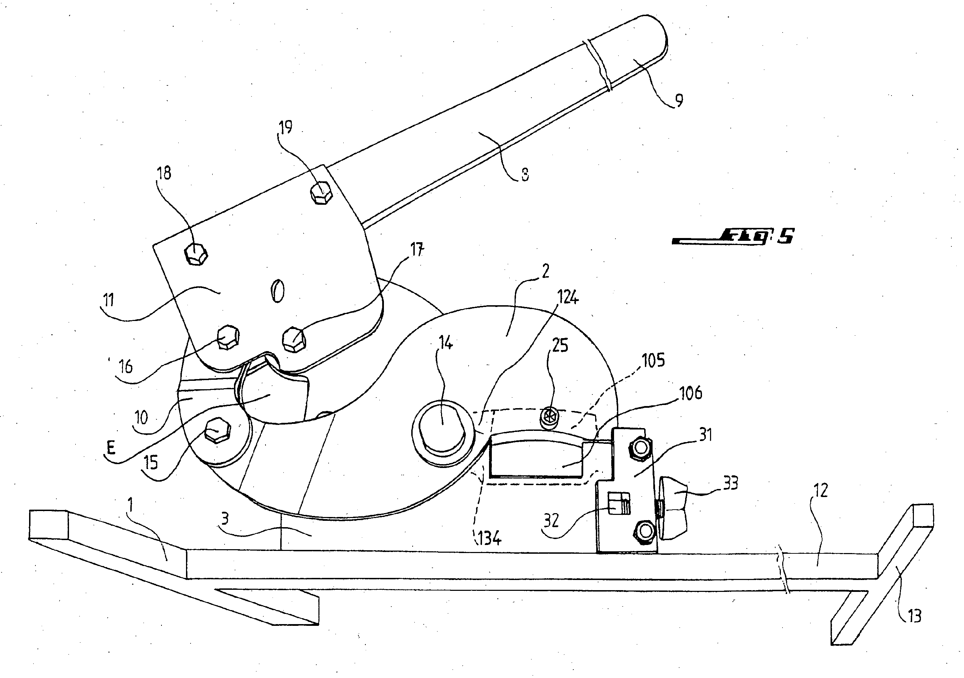

La figure 5 représente une variante de réalisation de l'outil décrit jusqu'ici. Alors que l'outil décrit en référence aux figures 1 à 4 est exclusivement conformé pour sectionner des tiges filetées, l'outil représenté sur la figure 5 est conformé pour sectionner aussi des éléments relativement plats tels que des barres de seuil ou d'autres types d'éléments allongés pour lesquels des matrices spécifiques peuvent être préparées.

Selon cette variante de réalisation, l'outil comprend un socle 1 et une lame 2 montée mobile sur un support 3 attaché au socle 1. La lame 2 est reliée à un bras 8 formant levier, par un mécanisme à genouillère 10, 11 et le bras 8 est pourvu d'une poignée 9. Afin de donner à l'outil de coupe une meilleure stabilité, le socle 1 est prolongé dans le plan de la coupe par un pied 12 comportant une partie transversale 13.

La lame 2 et le support 3 sont pourvus chacun d'une matrice référencée respectivement 105 et 106, ces matrices étant conformées pour recevoir ensemble et maintenir fermement pendant la découpe, une barre de seuil d'un profil prédéterminé auquel les matrices sont adaptées. A cet effet, chacune des deux matrices comporte un tranchant plat qui s'étend suivant une surface non plane correspondant à la forme du profil propre de la barre de seuil. Le tranchant de la matrice supérieure 105 a donc une surface essentiellement concave et ainsi complémentaire à la forme convexe de la face supérieure d'une barre de seuil et le tranchant de la matrice inférieure 106 a donc une surface essentiellement convexe et ainsi complémentaire à la forme concave de la face inférieure d'une barre de seuil.

Par ailleurs, pour élargir la gamme d'éléments allongés massifs pouvant être sectionnés avec un outil selon la présente invention, et notamment pour pouvoir monter efficacement différents types de matrices, la lame 2 et le support 3 sont modifiés de la manière suivante par rapport à l'outil décrit en référence aux figures 1 à 4.

A la place de la conception décrite plus haut, selon laquelle la lame 2 comporte, à l'endroit de montage de la matrice 5, une partie 24 déviée par rapport au plan de la lame et comportant des évidements demi-cylindriques afin de laisser la place, dans ledit plan de la lame 2, à la matrice 5 et afin de pouvoir mieux maintenir la tige à sectionner, l'outil de la figure 5 comporte à cet endroit une partie 124 avec un bord concave correspondant à la forme du tranchant de la matrice 105.

De manière analogue, le support 3 comporte une partie 134 déviée par rapport au plan du support 3, afin de laisser la place, dans ledit plan du support 3, à la matrice 106.

Les matrices 105, 106 sont fixées sur les parties déviées 124, 134 par des vis 25, 35. Grâce à cette disposition de l'invention, le cisaillement de la tige filetée est effectué par les matrices 105, 106 et les parties déviées 124, 134 contribuent au maintien de la tige par une surface d'appui plus large que par les seules matrices.

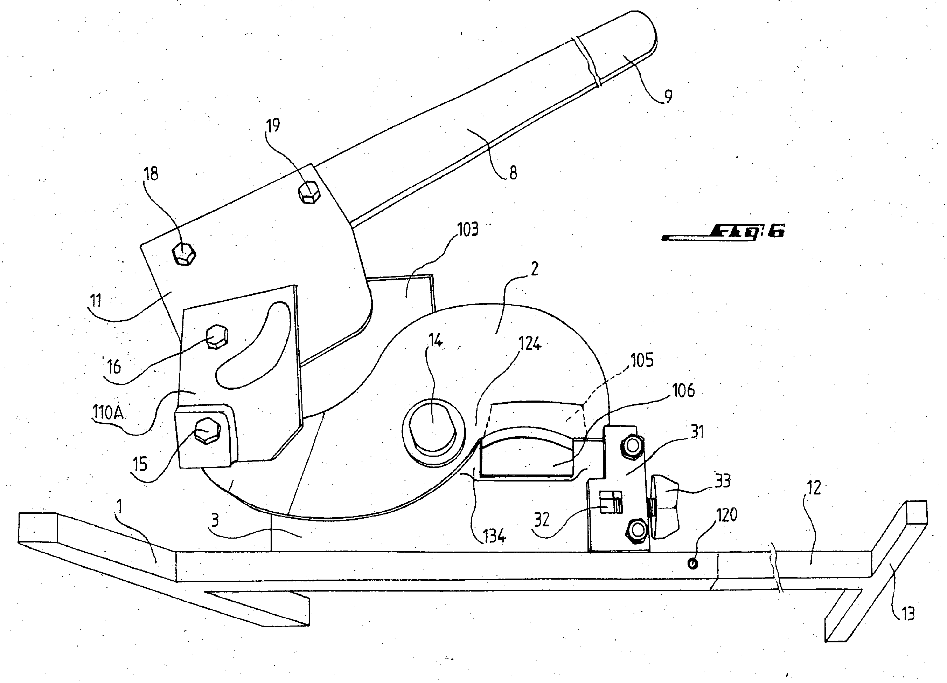

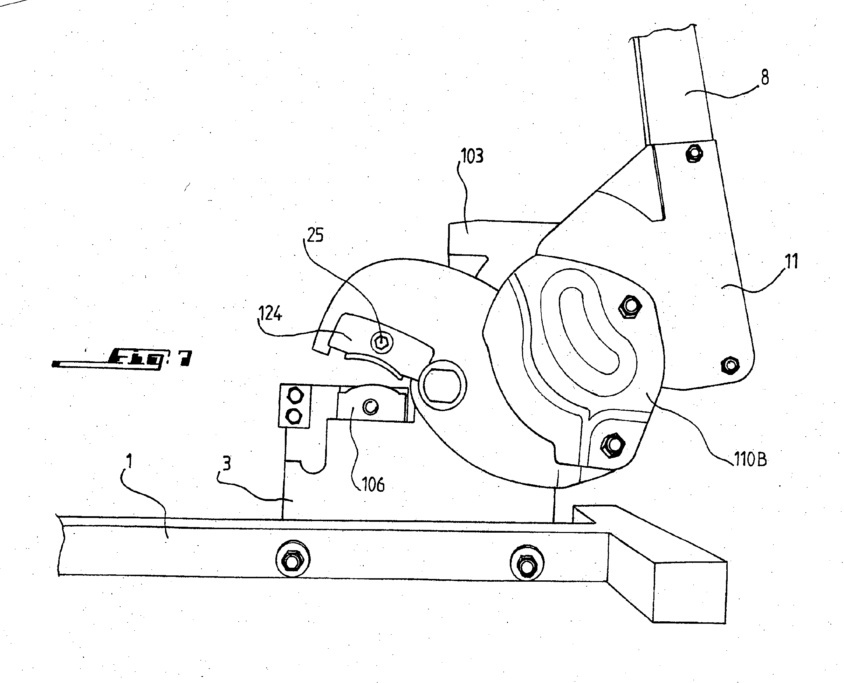

Les figures 6 et 7 représentent, en tant qu'un mode de réalisation de l'invention, un outil reprenant une grande partie des éléments de l'outil du premier mode de réalisation. Pour cela, la plupart des éléments portent les mêmes numéros de référence.

Le mode de réalisation se distingue de l' outil présenté ci-dessus par la conception du mécanisme de genouillère reliant la lame 2 au support 3.

En effet, selon la conception du ledit outil un passage E (voir figure 5) risque de se former entre la lame 2, le support 3 et les deux éléments 10, 11 reliant la lame 2 au support 3.

Pour remédier à cela, le mode de réalisation prévoit que l'élément reliant l'élément de liaison (11) solidaire du bras (8) est formé par deux plaques (110A, 110B) dont les dimensions sont déterminées de manière à obturer le passage E. Compte tenu du montage en porte-à-faux de la lame 2 par rapport au support 3, les deux plaques 110A, 110B ne sont pas symétriques l'une à l'autre.

Par ailleurs, la figure 6 indique très schématiquement la possibilité de deux variantes supplémentaires de réalisation de l'outil de l'invention. Selon la première, le support est rehaussé par une partie 103 servant comme butée pour le bas 8. Et selon la seconde, le pied 12 est formé comme un élément escamotable, pouvant être monté et démonté au socle 1 à l'aide d'un ou de deux boulons 120. L'outil de l'invention peut être réalisé indifféremment suivant l'une ou l'autre ou des deux variantes à la fois.

## Revendications

1. Outil de coupe pour sectionner des éléments allongés massifs tels des tiges filetées et des barres de seuil suivant un plan de cisaillement (P), l'outil comprenant un socle (1) et une lame (2) montée mobile sur un support (3) attaché au socle (1) et permettant de déplacer la lame (2) entre une position ouverte pour recevoir, entre la lame (2) et le support (3), l'élément allongé massif (4) qui doit être sectionné, et une position fermée à la fin d'une découpe,
la lame (2) et le support (3) étant pourvus chacun d'une matrice (5, 6) conformée pour recevoir l'élément allongé massif (4) au cours de la découpe, chacune des deux matrices (5, 6) ayant un tranchant (61) de forme et dimensions complémentaires à la forme et aux dimensions de l'élément allongé massif (4) à sectionner prises aux abords du plan de cisaillement (P), la lame (2) étant relié à un bras (8) formant levier, par un mécanisme à genouillère (10, 11),
**caractérisé en ce que** le mécanisme à genouillère comprend deux éléments de liaison (10, 11) dont l'un (11) est solidaire du bras (8) et le relie de manière pivotante et en porte-à-faux au support (3) et dont l'autre (10) relie l'élément de liaison (11) solidaire du bras (8) de manière pivotante à la lame (2), l'élément reliant l'élément de liaison (11) solidaire du bras (8) à la lame (2) étant formé par deux plaques (110A, 110B) conformées pour obturer un éventuel passage (E) s'ouvrant entre les éléments du mécanisme de genouillère, la lame (2) et le support (3).

2. Outil selon la revendication 1, **caractérisé en ce que** les matrices (5, 6) sont montées amovibles respectivement sur la lame (2) et sur le support (3).

3. Outil selon la revendication 1 ou 2, **caractérisé en ce que** la lame (2) et le support (3) sont pourvus chacun d'une matrice pourvu d'au moins un évidement demi-cylindrique (7) de forme et dimensions complémentaires à un filetage d'un élément allongé massif tel une tige filetée (4) à sectionner.

4. Outil selon la revendication 3, **caractérisé en ce que** la lame (2) et le support (3) sont pourvus chacun d'une matrice à trois évidements demi-cylindriques (7A, 7B, 7C) de formes et dimensions complémentaires à trois filetages différents de tiges filetées (4) à sectionner.

5. Outil selon la revendication 1 ou 2, **caractérisé en ce que** la lame (2) et le support (3) sont pourvus chacun d'une matrice pourvu d'un tranchant plat courbé, respectivement concave ou convexe, adapté à la section transversale d'un élément allongé massif tel une barre de seuil à sectionner.

6. Outil selon l'une quelconque des revendications 1 à 5, **caractérisé en ce que** le bras (8) est pourvu d'une poignée (9).

7. Outil selon l'une quelconque des revendications 1 à 6, **caractérisé en ce qu'**il comprend une règle mobile (20) en T montée transversalement, et de manière réglable, par rapport au socle (3) et constituant un appui pour l'élément allongé massif (4) à sectionner.

8. Outil selon la revendication 7, **caractérisé en ce que** la règle (20) est graduée.

9. Outil selon l'une quelconque des revendications 1 à 8, **caractérisé en ce que** le socle (1) est prolongé dans le plan de la coupe par un pied (12) assurant la stabilité de l'outil dans le plan de la coupe et dans un sens transversal à celui-ci.

10. Outil selon la revendication 9, **caractérisé en ce que** le pied (12) est escamotable.

## Patentansprüche

1. Schneidwerkzeug zum Durchtrennen von massiven länglichen Elementen, wie z.B. Gewindestangen und Schwellenschienen, entlang einer Schnittebene (P), wobei das Werkzeug einen Sockel (1) und eine Schneide (2) umfasst, welche beweglich über einer Halterung (3) angebracht ist, die an dem Sockel (1) angefügt ist und ermöglicht, die Schneide (2) zu verschieben zwischen einer offenen Position zum Aufnehmen, zwischen der Schneide (2) und der Halterung (3), des zu durchtrennenden länglichen massiven Elements (4) und einer geschlossenen Position am Ende eines Schneidvorgangs,
wobei die Schneide (2) und die Halterung (3) jeweils mit einem Gesenk (5, 6) versehen sind, welches angepasst ist, das längliche massive Element (4) im Verlauf des Schneidvorgangs aufzunehmen, wobei jedes der zwei Gesenke (5, 6) einen Schliff (61) mit Form und Abmessungen des zu durchtrennenden länglichen massiven Elements (4), erfasst in der Umgebung der Schnittebene (P), aufweist,
wobei die Schneide (2) über einen Kniehebelmechanismus (10, 11) mit einem Arm (8) verbunden ist, der einen Hebel bildet,
**dadurch gekennzeichnet, dass** der Kniehebelmechanismus zwei Verbindungselemente (10, 11) umfasst, von welchen das eine (11) an dem Arm (8) befestigt ist und ihn auf schwenkbare Weise auskragend mit der Halterung (3) verbindet, und von welchen das andere (10) das an dem Arm (8) befestigte Verbindungselement (11) auf schwenkbare Weise mit der Schneide (2) verbindet,
wobei das Element, welches das an dem Arm (8) befestigte Verbindungselement (11) mit der Schneide (2) verbindet, gebildet ist durch zwei Platten (110A, 110B), welche angepasst sind, um einen möglichen Durchgang (E) zu erhalten, welcher sich zwischen den Elementen des Kniehebelmechanismus, der Schneide (2) und der Halterung (3) öffnet.

2. Werkzeug nach Anspruch 1, **dadurch gekennzeichnet, dass** die Gesenke (5, 6) unbeweglich an der Schneide (2) bzw. der Halterung (3) angebracht sind.

3. Werkzeug nach Anspruch 1 oder 2, **dadurch gekennzeichnet, dass** die Schneide (2) und die Halterung (3) jeweils mit einem Gesenk versehen sind, welches versehen ist mit wenigstens einer halbzylindrischen Aussparung (7) mit Form und Abmessungen, welche komplementär zu einem Gewinde eines zu durchtrennenden länglichen massiven Elements wie einer Gewindestange (4) sind.

4. Werkzeug nach Anspruch 3, **dadurch gekennzeichnet, dass** die Schneide (2) und die Halterung (3) jeweils versehen sind mit einem Gesenk mit drei halbzylindrischen Aussparungen (7A, 7B, 7C) mit Formen und Abmessungen, welche komplementär zu drei verschiedenen Gewinden von zu durchtrennenden Gewindestangen (4) sind.

5. Werkzeug nach Anspruch 1 oder 2, **dadurch gekennzeichnet, dass** die Schneide (2) und die Halterung (3) jeweils mit einem Gesenk versehen sind, welches versehen ist mit einem konkaven bzw. konvexen flachen Schliff, welcher an den Querschnitt eines zu durchtrennenden länglichen massiven Elements wie eine Schwellenschiene angepasst ist.

6. Werkzeug nach einem der Ansprüche 1 bis 5, **dadurch gekennzeichnet, dass** der Arm (8) mit einem Griff (9) versehen ist.

7. Werkzeug nach einem der Ansprüche 1 bis 6, **dadurch gekennzeichnet, dass** es ein T-artig bewegliches Lineal (20) umfasst, welches quer und auf im Bezug auf den Sockel (1) einstellbare Weise angebracht ist und einen Anschlag für das zu durchtrennende längliche massive Element (4) bildet.

8. Werkzeug nach Anspruch 7, **dadurch gekennzeichnet, dass** das Lineal (20) mit einer Skala versehen ist.

9. Werkzeug nach einem der Ansprüche 1 bis 8, **dadurch gekennzeichnet, dass** der Sockel (1) in der Ebene des Schnitts verlängert ist durch einen Fuß (12), welcher die Stabilität des Werkzeugs in der Ebene des Schnitts und in einer Querrichtung dazu sicherstellt.

10. Werkzeug nach Anspruch 9, **dadurch gekennzeichnet, dass** der Fuß (12) einklappbar ist.

## Claims

1. Cutting tool for cutting lengths of solid elongate elements, such as threaded rods and sill bars, along a shearing plane (P), which tool comprises a base (1) and a blade (2) mounted so as to be displaceable on a support (3) attached to the base (1) and enabling the blade (2) to be displaced between an open position in order to receive the solid elongate element (4) which has to be cut to length between the blade (2) and the support (3) and a closed position at the end of a cutting operation, the blade (2) and the support (3) each being provided with a die (5,6) of a shape designed to receive the solid elongate element (4) during the cutting operation, each of the two dies (5, 6) having a cutting edge (61) of a shape and dimensions complementing the shape and dimensions of the solid elongate element (4) to be cut to length at the edges of the shearing plane (P), the blade (2) being connected to an arm (8) constituting a lever by means of a knuckle joint mechanism (10, 11), **characterised in that** the knuckle joint mechanism comprises two link elements (10, 11), one (11) of which is connected to the arm (8) and connects it to the support (3) in a pivoting and cantilevered arrangement and the other (10) of which connects the link element (11) connected to the arm (8) to the blade (2) in a pivoting arrangement, the element connecting the link element (11) connected to the arm (8) to the blade (2) being formed by two plates (110A, 110B) which are shaped so as to block a passage (E) which might open up between the elements of the knuckle joint mechanism, the blade (2) and the support (3).

2. Tool as claimed in claim 1, **characterised in that** the dies (5, 6) are mounted so as to be interchangeable respectively on the blade (2) and on the support (3).

3. Tool as claimed in claim 1 or 2, **characterised in that** the blade (2) and the support (3) are each provided with a die having at least one semi-cylindrical recess (7) of a shape and dimensions complementing a thread of a solid elongate element such as a threaded rod (4) to be cut to length.

4. Tool as claimed in claim 3, **characterised in that** the blade (2) and the support (3) are each provided with a die having three semi-cylindrical recesses (7A, 7B, 7C) of shapes and dimensions complementing three different threads of threaded rods (4) to be cut to length.

5. Tool as claimed in claim 1 or 2, **characterised in that** the blade (2) and the support (3) are each provided with a die having a curved flat cutting edge, respectively concave or convex, adapted to the cross-section of a solid elongate element such as a sill bar to be cut to length.

6. Tool as claimed in any one of claims 1 to 5, **characterised in that** the arm (8) is provided with a handle (9).

7. Tool as claimed in any one of claims 1 to 6, **characterised in that** it has a displaceable T-shaped rule (20) mounted transversely and so as to be adjustable relative to the base (1) and constituting a support for the solid elongate element (4) to be cut to length.

8. Tool as claimed in claim 7, **characterised in that** the rule (20) is graduated.

9. Tool as claimed in any one of claims 1 to 8, **characterised in that** the base (1) is extended by a foot (12) in the cutting plane imparting stability to the tool in the cutting plane and in a direction extending transversely thereto.

10. Tool as claimed in claim 9, **characterised in that** the foot (12) is detachable.
